# EUROPEAN PATENT APPLICATION

(11) **EP 1 972 829 A1**
(43) Date of publication of application: **24.09.2008**
(21) Application number: 05820353.0
(22) Date of filing: 21.12.2005
(51) Int. Cl.: F16G 13/02

(54) **POWER TRANSMISSION CHAIN AND POWER TRANSMISSION DEVICE**

(71) Applicant: JTEKT Corporation, Osaka-shi Osaka 542-8502 (JP)
(72) Inventor: KAMAMOTO, Shigeo, Osaka 542-8502 (JP); YASUHARA, Shinji, Osaka 542-8502 (JP); KITAMURA, Kazuhisa, Osaka 542-8502 (JP); FUKUI, Nobuki, Osaka 542-8502 (JP)
(74) Representative: Steil, Christian
(86) International application number: PCT/JP2005/023509
(87) International publication number: WO 2007/072559

(57) **Abstract**

A power transmission chain (1) has long metal links (2) and connection members (200) including first and second pins (3, 4). The longitudinal direction of the long links (2) is along the travel direction (X1) of the chain. The longitudinal direction of the first and second pins (3, 4) is along the width direction (W1) of the chain. The links (2) and the first and second pins (3, 4) form fiber flows (41, 43), each extending in a predetermined direction. The predetermined direction is parallel to or intersects the lengthwise direction of the links (2) and the first and second pins (3, 4) where the fiber flows (41, 43) are formed at a predetermined angle or smaller.

## Description

### Technical Field

The present invention relates to a power transmission chain and a power transmission apparatus.

### Background Art

For a power transmission apparatus, such as a pulley-type continuously variable transmission (CVT) in an automobile, a power transmission belt (for example, see Patent Documents 1 through 3) and a power transmission chain are used.

Of these, there is a type of power transmission chain in which plural links made of metal are aligned in the chain travel direction and corresponding links are coupled to one another with a pair of pins. Such a power transmission chain transmits power between pulleys by frictional contact of a pair of end faces of each pin with taper discs of the pulleys.

Generally, the links are formed by punching out a strip-shaped steel plate, and each extends lengthwise in the chain travel direction and also extends widthwise in a direction orthogonal to both the chain travel direction and the chain width direction (the radial direction of the chain) (for example, see Patent Documents 4 and 5).

Such a power transmission chain includes pins each varied within a range of about 0.2 mm in full length with the aim of improving noises (for example, see Patent Document 6). There is another type that a surface layer portion is formed on the end faces of the pins by means of hardening in order to improve wear resistance that occurs when the end faces come into contact with the sheave surfaces of the pulleys (for example, see Patent Document 7).

Each link is formed with a pin insertion hole. The peripheries of the pin insertion holes in the links aligned adjacent in the chain travel direction are superimposed on one another, and a pair of pins is inserted through these pin insertion holes. The pair of pins allow rolling contact with each other, so that when an adjacent link bends relatively, the pair of pins come into rolling contact with each other. A tensile force (power) acts between the links aligned adjacent in the chain travel direction via a pair of these pins.
Patent Document 1: Japanese Unexamined Patent Publication No. 10-115349
Patent Document 2: Japanese Unexamined Patent Publication No. 2002-295596
Patent Document 3: Japanese Unexamined Patent Publication No. 5-157146
Patent Document 4: Japanese Unexamined Patent Publication No. 2002-130384
Patent Document 5: Japanese Unexamined Patent Publication No. 8-312725
Patent Document 6: Japanese Unexamined Patent Publication No. 63-53337
Patent Document 7: Japanese Unexamined Patent Publication No. 2004-190829

### Disclosure of the Invention

### Problems that the Invention is to Solve

The links undergo a tensile force from the pins in association with the driving of the power transmission chain and a large tensile load in the chain travel direction (lengthwise direction). Accordingly, when the links break, a fracture tends to develop in a direction orthogonal to both the chain travel direction and the chain width direction(widthwise direction).

There has been a need for the power transmission chain as above and other general power transmission chains to further enhance practical durability. The invention therefore has an object to provide a power transmission chain and a power transmission apparatus capable of solving the problems discussed above.

### Means for Solving the Problems

In order to achieve the above and other objects, a preferred aspect of the invention provides a power transmission chain including long first and second power transmission elements made of metal and coupled to each other. A lengthwise direction of the first power transmission element is along a chain travel direction. A lengthwise direction of the second power transmission element is along a chain width direction orthogonal to the chain travel direction. At least one of the first and second power transmission elements includes a fiber flow. The fiber flow is parallel to the lengthwise direction of the at least one of the first and second power transmission elements or intersects the lengthwise direction of the at least one of the first and second power transmission elements at a predetermined angle or smaller.

According to this aspect, the fiber flow of the first power transmission element is provided so as to be parallel to the lengthwise direction of the first power transmission element or to intersect the lengthwise direction at a predetermined angle or smaller. Accordingly, it is possible to increase the fatigue strength of the first power transmission element remarkably with respect to the chain travel direction. Hence, when a tensile force in the chain travel direction acts on the first power transmission element in association with the driving of the power transmission chain, the first power transmission element having sufficient fatigue strength can undergo this tensile force. Consequently, it is possible to enhance the practical durability of the power transmission chain remarkably.

The fiber flow of the second power transmission element is provided so as to be parallel to the lengthwise direction of the second power transmission element or to intersect the lengthwise direction at a predetermined angle or smaller. Accordingly, it is possible to increase the impact value (Charpy impact value) and the fatigue strength of the second power transmission element sufficiently. Hence, because sufficient strength can be provided to the second power transmission element, the second power transmission element stands strong against an impact received from the first power transmission element or the like and has high fatigue strength. It is thus possible to prevent the occurrence of damage on the second power transmission element over a long period. Consequently, it is possible to ensure sufficient practical durability of the power transmission chain by ensuring the strength of the second power transmission element sufficiently.

### Brief Description of the Drawings

Fig. 1 is a perspective view schematically showing the configuration of a major portion of a chain-type continuously variable transmission as a power transmission apparatus provided with a power transmission chain according to one embodiment of the invention.
Fig. 2 is a partial enlarged section of a drive pulley (driven pulley) and a chain of Fig. 1.
Fig. 3 is a section of a major portion of the chain.
Fig. 4 is a section taken on line IV-IV of Fig. 3 and showing a chain straight region.
Fig. 5A is a partial side view of a link.
Fig. 5B is a partial side view of a metal material as a raw material of the link.
Fig. 6A is a partial enlarged front view of a first pin showing a case where an angle of a predetermined direction with respect to the lengthwise direction of the first pin is 0°.
Fig. 6B is another partial enlarged front view of the first pin showing a case where an angle of a predetermined direction with respect to the lengthwise direction of the first pin is larger than 0°.
Fig. 7 is a section schematically showing a major portion of a continuously variable transmission.
Fig. 8 is a partial side view of a link according to another embodiment of the invention.
Fig. 9 is a partial section view of a major portion according to still another embodiment of the invention.
Fig. 10A is a graph showing the cycle numbers until the links break under the loading condition (1).
Fig. 10B is a graph showing the cycle numbers until the links break under the loading condition (2).
Fig. 11 is a view for describing a 3-point bending test.
Fig. 12 is a graph showing a relation of the cycle number until the first pins break and the maximum value of the cycle load.
Fig. 13 is a graph showing a relation of the frequency and the sound pressure level of driving sounds of Comparative Example 3.
Fig. 14 is a graph showing a relation of the frequency and the sound pressure level of driving sounds of Example 1.
Fig. 15 is a graph showing a relation of the frequency and the sound pressure level of driving sounds of Example 2.

### Best Mode for Carrying Out the Invention

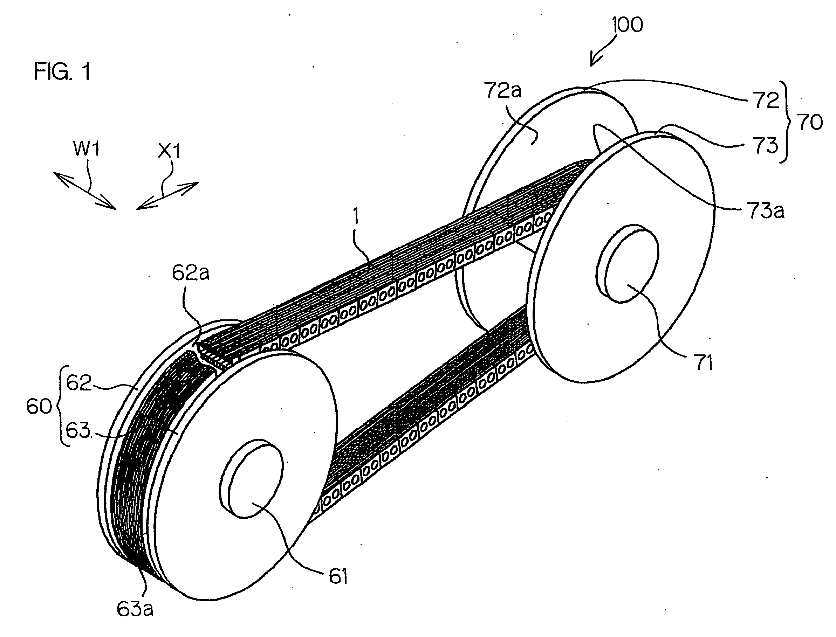

Fig. 1 is a perspective view schematically showing the configuration of a major portion of a chain-type continuously variable transmission (hereinafter, also referred to simply as the continuously variable transmission) as a power transmission apparatus provided with a power transmission chain according to one embodiment of the invention.

Referring to Fig. 1, a continuously variable transmission 100 is mounted on a vehicle, such as an automobile. The continuously variable transmission 100 includes a drive pulley 60 made of metal (structural steel or the like) as one of a pair of pulleys, a driven pulley 70 made of metal (structural steel or the like) as the other one of a pair of pulleys, and an endless power transmission chain 1 wound around the pair of pulleys 60 and 70. Hereinafter, the power transmission chain 1 is also referred to simply as the chain 1. Power is transmitted between the drive pulley 60 and the driven pulley 70 via the chain 1. For ease of understanding, the partial section of the chain 1 is shown in Fig. 1.

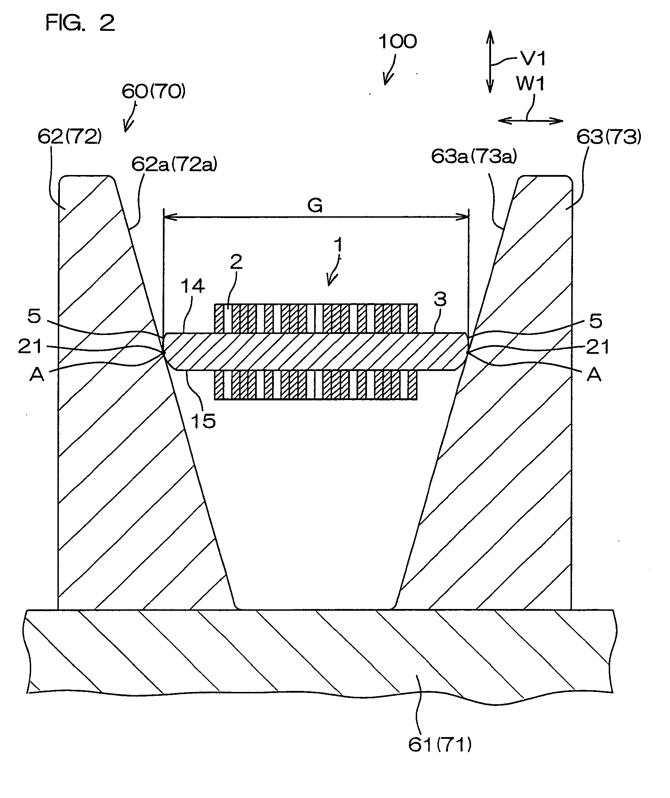

Fig. 2 is a partial enlarged section of the drive pulley 60 (driven pulley 70) and the chain 1 of Fig. 1. Referring to Fig. 1 and Fig. 2, the drive pulley 60 is attached rotatable together to an input shaft 61 that is coupled to a drive source of the vehicle so that power can be transmitted from the driving source. The drive pulley 60 includes a stationary sheave 62 and a movable sheave 63.

The stationary sheave 62 and the movable sheave 63 have a pair of mutually opposing sheave surfaces 62a and 63a, respectively. Each of the sheave surfaces 62a and 63a includes an inclined surface in the form of a circular conical surface. A groove is defined between these sheave surfaces 62a and 63a and the chain 1 is caught tightly and held in this groove.

A hydraulic actuator (not shown) to change the groove width is connected to the movable sheave 63. The groove width can be varied at speed change by moving the movable sheave 63 in the axial direction of the input shaft 61 (right-left direction in Fig. 2). Accordingly, the chain 1 can move in the radial direction of the input shaft 61 (top-bottom direction in Fig. 2), which makes it possible to change an effective radius of the drive pulley 60 with respect to the chain 1 (equivalent to a winding radius of the chain 1).

Meanwhile, as are shown in Fig. 1 and Fig. 2, the driven pulley 70 is attached rotatable together to an output shaft 71 that is coupled to the drive wheel (not shown) so that power can be transmitted to the drive wheel. Accordingly, the driven pulley 70 includes a stationary sheave 73 and a movable sheave 72. The stationary sheave 73 and the movable sheave 72 have a pair of mutually opposing sheave surfaces 73a and 72a, respectively, to define a groove in which the chain 1 is to be caught tightly.

As with the movable sheave 63 of the drive pulley 60, a hydraulic actuator (not shown) is connected to the movable sheave 72 of the driven pulley 70, so that the groove width is varied at speed change by moving the movable sheave 72. It is thus possible to change an effective radius of the driven pulley 70 with respect to the chain 1 (equivalent to a winding radius of the chain 1) by moving the chain 1.

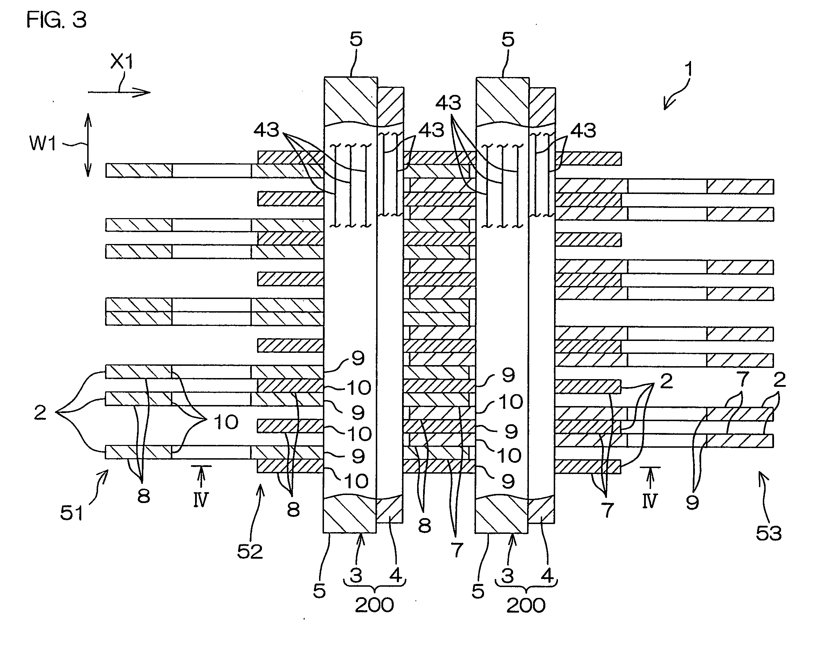

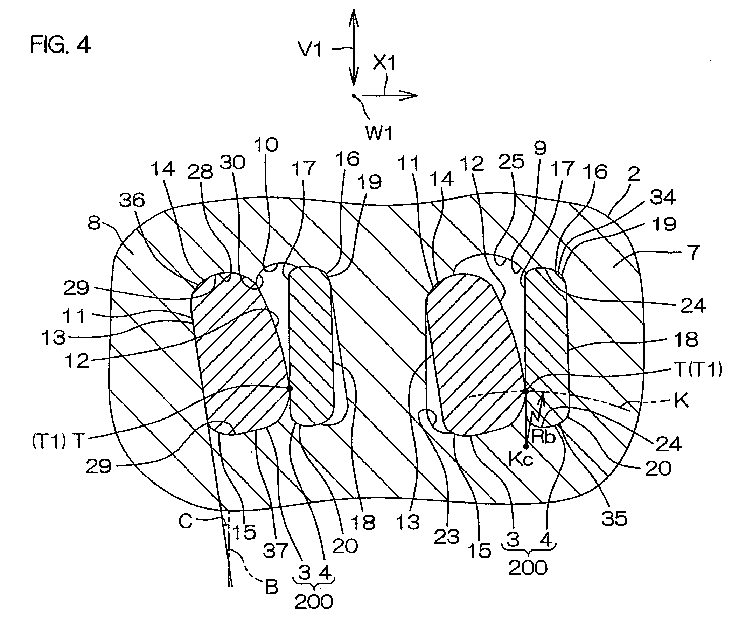

Fig. 3 is a section of a major portion of the chain 1. Fig. 4 is a section taken on line IV-IV of Fig. 3 and showing the chain straight region. Hereinafter, descriptions will be given to the configuration of the chain straight region as a reference.

Referring to Fig. 3 and Fig. 4, the chain 1 includes a link 2 as a long first power transmission element made of metal, and a coupling member 200 as a long second power transmission element made of metal. Both the link 2 and the coupling member 200 are provided in plural. The coupling member 200 is to couple the aligned links 2 adjacent to one another. The respective links 2 and the corresponding coupling member 200 are coupled to each another.

Each link 2 is formed in the shape of a plate and extends lengthwise along the chain travel direction X1. The thickness direction of each link 2 is along the chain width direction W1 orthogonal to the chain travel direction X1. Each link 2 extends widthwise in the orthogonal direction V1 orthogonal to both the chain travel direction X1 and the chain width direction W1 (hereinafter, referred to simply as the orthogonal direction).

The link 2 includes a front end portion 7 and a rear end portion 8 as a pair of end portions aligned in front and rear in the chain travel direction X1. The front end portion 7 and the rear end portion 8 are provided with a front through-hole 9 as a first through-hole and a rear through-hole 10 as a second through-hole, respectively. The peripheral portion of the link 2 shapes a smooth curve, which is formed in a shape that hardly causes stress concentration.

First through third link lines 51 through 53 are formed using the links 2. To be more concrete, the first link line 51, the second link line 52, and the third link line 53 each include plural links 2 aligned in the chain width direction W1. In each of the first through third link lines 51 through 53, the links 2 in the same link line are aligned so that all are lined up at the same position in the chain travel direction X1. The first through third link lines 51 through 53 are disposed along the chain travel direction X1.

The respective links 2 in the first through third link lines 51 through 53 are coupled to the corresponding links 2 in the first through third link lines 51 through 53 mutually bendable using the corresponding coupling members 200.

To be more concrete, the front through-hole 9 in the link 2 of the first link line 51 and the rear through-hole 10 in the link 2 of the second link line 52 are aligned in the chain width direction W1 and correspond to each other. The links 2 in the first and second link lines 51 and 52 are coupled bendable to each other in the chain travel direction X1 using the coupling member 200 that is inserted through these through-holes 9 and 10.

Likewise, the front through-hole 9 in the link 2 of the second link line 52 and the rear through-hole 10 in the link 2 of the third link line 53 are aligned in the chain width direction W1 and correspond to each other. The links 2 in the second and third link lines 52 and 53 are coupled bendable to each other in the chain travel direction X1 using the coupling member 200 that is inserted through these through-holes 9 and 10.

In Fig. 3, the first through third link lines 51 through 53 are shown one for each. However, the first through third link lines 51 through 53 are disposed repetitively along the chain travel direction X1. The links 2 of two link lines adjacent to each other in the chain travel direction X1 are successively coupled to each other with the corresponding coupling members 200 to form the endless chain 1.

Each coupling member 200 extends lengthwise along the chain width direction W1. Each coupling member 200 includes first and second pins 3 and 4 as first and second power transmission members in a pair. The first and second pins 3 and 4 in a pair are adapted to come into rolling and sliding contact with each other. The term "rolling and sliding contact" means contact including at least one of rolling contact and sliding contact.

The first pin 3 is the first power transmission member that extends long (in the shape of a plate) in the chain width direction W1. The first pin 3 is inserted through a rear side region in the chain travel direction X1 of the corresponding through-holes 9 and 10 in the respective links 2. A pair of end portions in the lengthwise direction of the first pin 3 (chain width direction W1) protrudes in the chain width direction W1 from the links 2 disposed at a pair of end portions in the chain width direction W1.

Referring to Fig. 2, a pair of end faces 5 of the first pin 3 are for frictional contact (engagement) with the corresponding sheave surfaces 62a and 63a and 72a and 73a of the pulleys 60 and 70, respectively.

The first pin 3 is clamped between the corresponding sheave surfaces 62a and 63a or 72a and 73a. Accordingly, power is transmitted between the first pin 3 and the respective pulleys 60 and 70. Because the first pin 3 contributes to direct power transmission by the end faces 5, it is made of a high-strength material with excellent wear resistance, for example, bearing steel (SUJ2 material of Japanese Industrial Standard).

Each end face 5 of the first pin 3 is formed in a shape including a part of spherical surface, and it curves convexly to the outside in the chain width direction W1. One end portion 14 of the first pin 3 with respect to the orthogonal direction V1 is formed longer (wider) in the chain width direction W1 than the other end portion 15. The end faces 5 thus face toward inside of the chain's diameter direction. A pair of the end faces 5 of the first pin 3 forms a symmetric shape with respect to the chain width direction W1.

Each end face 5 is provided with a contact region 21 as an engagement region. Of the end faces 5, the contact regions 21 is adapted to transmit power by contact with the corresponding sheave surfaces 62a and 63a and 72a and 73a of the pulleys 60 and 70, respectively.

A contact center point A as the center point of the contact region 21 coincides with the center of figure of the end face 5. It should be noted, however, that the position of the contact center point A may be displaced (offset) with respect to the center of figure of the end face 5.

Referring to Fig. 3 and Fig. 4, the second pin 4 (referred to also as the strip or the interpiece) is the second power transmission member that extends long (in the shape of a plate) in the chain width direction W1. The second pin 4 is inserted through a front side region in the chain travel direction X1 of the corresponding through-holes 9 and 10 in the respective links 2. The second pin 4 is disposed in front of the chain travel direction X1 to the first pin 3 in the pair. The second pin 4 is formed shorter than the first pin 3 in the chain width direction W and therefore does not come into contact with the sheave surfaces of the respective pulleys. With respect to the chain travel direction X1, the second pin 4 is formed thinner than the first pin 3.

The chain 1 is a so-called press-fit type chain. To be more concrete, the first pin 3 is loose-fit in the corresponding front through-holes 9 in the respective links 2 so as to be relatively movable and press-fit in the corresponding rear through-holes 10 in the respective links 2 so as to be restricted in relative movements. The second pin 4 is press-fit in the corresponding front through-holes 9 in the respective links 2 so as to be restricted in relative movements and loose-fit in the corresponding rear through-holes 10 in the respective links 2 so as to be relatively movable.

In other words, the corresponding first pin 3 is loose-fit in the front through-holes 9 in the respective links 2 so as to be relatively movable and the corresponding second pin 4 is press-fit therein so as to be restricted in relative movements. Further, the corresponding first pin 3 is press-fit in the rear through-holes 10 in the respective links 2 so as to be restricted in relative movements and the corresponding second pin 4 is loose-fit therein so as to be relatively movable.

According to the configuration as described above, when the links 2 aligned adjacent in the chain travel direction X1 bend with respect to each other, the first pin 3 comes into rolling and sliding contact with the second pin 4 in the pair to move relatively with respect to the second pin 4. In this instance, a tensile force in the chain travel direction X1 acts on the respective links 2 from the corresponding first and second pins 3 and 4.

The locus of movement of the contact portion T of the first and second pins 3 and 4 shapes an almost involute curved surface in reference to the first pin 3. More specifically, the locus of movement of the contact portion T when viewed from the chain width direction W1 shapes an almost involute curve.

To be more concrete, the peripheral surface 11 (outer peripheral surface) of the first pin 3 includes a front portion 12 that opposes the second pin 4 in the pair and is contactable with the second pin 4. The section of the front portion 12 is shaped into an involute curve. The involute curve is based on a base circle K. The center KC of the base circle K is aligned in the orthogonal direction V1 with respect to the contact portion T1 in the chain straight region and positioned on inside of the chain's diameter direction with respect to the contact portion T1. The base circle K has a predetermined base circle radius Rb and passes through the contact portion T1. The front portion 12 faces forward in the chain travel direction X1.

The peripheral surface 16 (outer peripheral surface) of the second pin 4 includes a back portion 17 that opposes the first pin 3 in the pair and is contactable with the front portion 12 of the first pin 3. The section of the back portion 17 is shaped into a straight line orthogonal to the chain travel direction X1. In short, the back portion 17 is formed on a flat plane orthogonal to the chain travel direction X1. The back portion 17 faces backward in the chain travel direction X1.

The peripheral surface 11 of the first pin 3 extends in the chain width direction W1 (direction perpendicular to the sheet surface of Fig. 4). The peripheral surface 11 has the front portion 12 described above, a back portion 13 opposing the front portion 12, and the one end portion 14 and the other end portion 15 described above as a pair of the end portions with respect to the orthogonal direction V1.

The back portion 13 is formed as a flat surface facing backward in the chain travel direction X1. This flat surface has a predetermined angle of attack C (for example, 10°) with respect to a plane B orthogonal to the chain travel direction X1 (plane orthogonal to the sheet surface of Fig. 4). More specifically, the back portion 13 is inclined at 10° in a counterclockwise direction of the drawing with respect to the plane B and faces toward outside of the chain' s diameter direction.

Of the peripheral surface 11 of the first pin 3, the one end portion 14 forms the end portion on outside of the chain's diameter direction side (one of the ends in the orthogonal direction V1), and is disposed between the end portions of the front portion 12 and the back portion 13 on outside of the chain's diameter direction side. The one end portion 14 is formed into a curved surface that convexly curves toward outside of the chain's diameter direction.

Of the peripheral surface 11 of the first pin 3, the other end portion 15 forms the end portion on inside of the chain's diameter direction side (the other end in the orthogonal direction V1), and is disposed between the end portions of the front portion 12 and the back portion 13. The other end portion 15 is formed into a smooth surface and the intermediate portion of the other end portion 15 in the circumferential direction faces toward inside of the chain's diameter direction.

The peripheral surface 16 of the second pin 4 extends in the chain width direction W1. The peripheral surface 16 has the back portion 17 described above, a front portion 18 opposing the back portion 17, and one end portion 19 and the other end portion 20 as the surfaces of a pair of end portions with respect to the orthogonal direction V1.

The front portion 18 faces forward in the chain travel direction X1 and is formed into a flat surface orthogonal to the chain travel direction X1.

Of the peripheral surface 16 of the second pin 4, the one end portion 19 forms the end portion on outside of the chain's diameter direction side, and is disposed between the end portions of the back portion 17 and the front portion 18. The one end portion 19 is formed into a curved surface that convexly curves toward outside of the chain's diameter direction.

Of the peripheral surface 16 of the second pin 4, the other end portion 20 forms the end portion on inside of the chain's diameter direction side, and is disposed between the end portions of the back portion 17 and the front portion 18. The other end portion 20 is formed into a curved surface that convexly curves toward inside of the chain's diameter direction.

The first pin 3 is loose-fit in the front through-hole 9 in the link 2 and the second pin 4 is press-fit therein in the manner as follows. That is, the peripheral portion 23 of the front through-hole 9 in the link 2 includes press-fit portions 24 in which press-fitting portions 34 and 35 of the second pin 4 described below are press-fit, and a loose-fit portion 25 in which the first pin 3 is loose-fit.

The press-fit portions 24 receive the one end portion 19 and the other end portion 20 of the second pin 4. Of the press-fit portions 24, a part receiving the one end portion 19 of the second pin 4 is applied with a pressing force toward outside of the chain' s diameter direction by the second pin 4. Of the press-fit portions 24, a part receiving the other end portion 20 of the second pin 4 is applied with a pressing force toward inside of the chain's diameter direction by the second pin 4.

Of the one end portion 19 and the other end portion 20 of the second pin 4, the parts engaging with the press-fit portions 24 are the press-fitting portions 34 and 35, individually.

The loose-fit portion 25 is disposed behind the press-fit portions 24 with respect to the chain travel direction X1, and is formed into a shape larger than the sectional shape of the first pin 3.

The first pin 3 is press-fit in the rear through-hole 10 in the link 2 and the second pin 4 is loose-fit therein in the manner as follows. That is, the peripheral portion 28 of the rear through-hole 10 in the link 2 includes press-fit portions 29 in which press-fitting portion 36 and 37 of the first pin 3 described below are press-fit, and a loose-fit portion 30 in which the second pin 4 is loose-fit.

The press-fit portions 29 receive the one end portion 14 and the other end portion 15 of the first pin 3. Of the press-fit portions 29, a part receiving the one end portion 14 of the first pin 3 is applied with a pressing force toward outside of the chain' s diameter direction by the first pin 3. Of the press-fit portions 29, a part receiving the other end portion 15 of the first pin 3 is applied with a pressing force toward inside of the chain's diameter direction by the first pin 3.

Of the one end portion 14 and the other end portion 15 of the first pin 3, parts engaging with the press-fit portions 29 are the press-fitting portions 36 and 37, individually.

The loose-fit portion 30 is disposed ahead of the press-fit portions 29 with respect to the chain travel direction X1 and formed into a shape larger than the sectional shape of the second pin 4.

According to the configuration described above, the first and second pins 3 and 4 press-fit in the link 2 sandwich the other first and second pins 3 and 4 loose-fit in this link 2 in the chain travel direction X1.

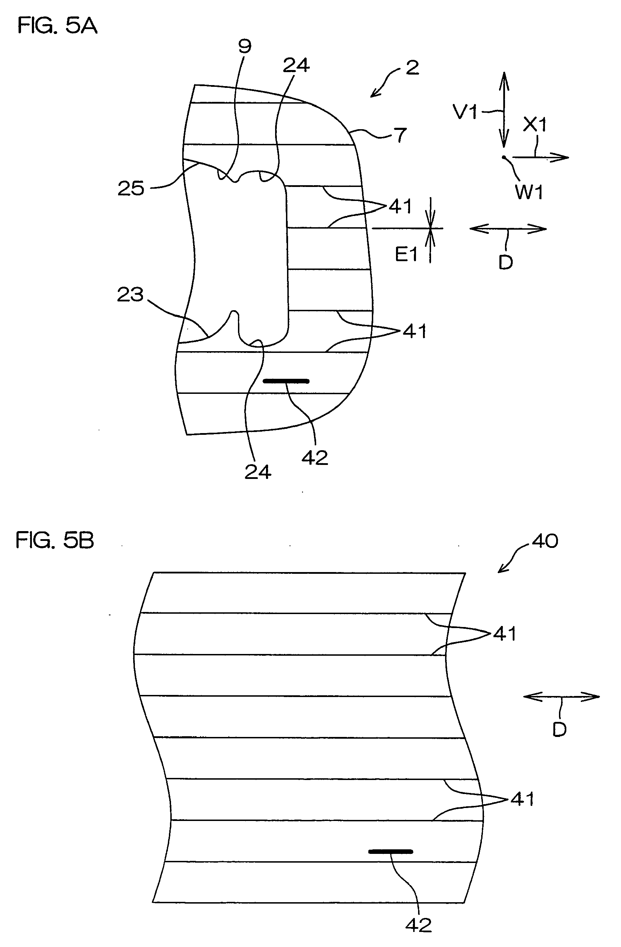

Fig. 5A is a partial side view of the link 2. Fig. 5B is a partial side view of a metal material 40 as a raw material of the link 2. Referring to Fig. 5A and Fig. 5B, the metal material 40 is, for example, a strip-shaped (plate-shaped) rolled copper plate. Examples of a material of this copper plate can be at least one of SK5, SAE1075, S55C, SCM435, and SNCM220.

The metal material 40 is formed with linear fiber flows 41 along the rolling direction D across the entire area in the chain travel direction X1. The term "fiber flows" means a structure in which crystals, impurities, and the like in the metal material are aligned in fibrous form by means of plastic forming.

Generally, impurities (inclusions), such as sulfur content, are mixed into a metal material. An impurity 42 is mixed into the metal material 40, and the impurity 42 is extended in the rolling direction D by means of rolling. The impurity 42 therefore forms a part of the fiber flows 41 of the metal material 40.

One of the characteristics of this embodiment is that the link 2 is formed by punching out the metal material 40 (by means of pressing). When viewed along the chain width direction W1, the rolling direction D, which is a predetermined direction in which the fiber flows 41 of the link 2 extend, is parallel to the chain travel direction X1, which is the lengthwise direction of the link 2, or intersects the chain travel direction X1 at a predetermined angle or smaller. Of the link 2, the fiber flows 41 are provided across the entire area in the chain travel direction X.

It is preferable that an angle E1 yielded between the rolling direction D and the chain travel direction X1 is set to a range of 0° to 45° (0° ≤ E1 ≤ 45°). It is more preferable to set the range of the angle E1 to a range of 0° to 20° (0° ≤ E1 ≤ 20°).

In this embodiment, the rolling direction D and the chain travel direction X1 are parallel to each other, and the angle E1 is set to 0°. The link 2 is punched out from the metal material 40 in such a manner that the rolling direction D becomes parallel to the chain travel direction X1.

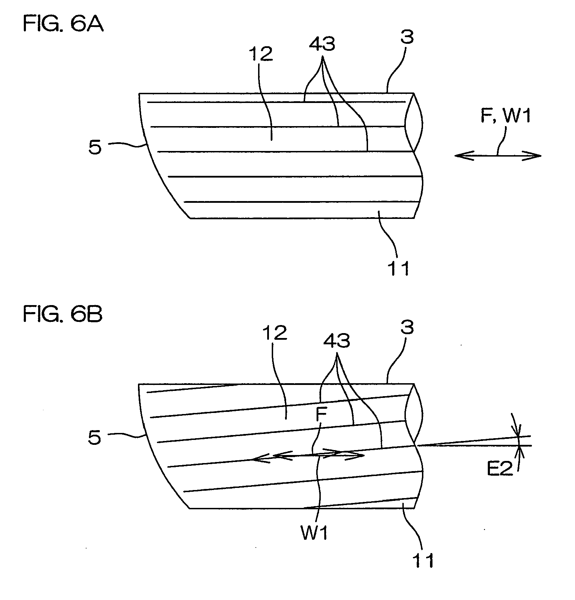

Fig. 6A is a partial enlarged front view of the first pin 3. Referring to Fig. 6A, each first pin 3 is formed by means of either drawing or rolling of a metal material (wire rod) (in this embodiment, by means of drawing), and fiber flows 43 appear on the peripheral surface 11 along the entire circumference. The fiber flows 43 are provided across the entire area in the chain width direction W1 as the lengthwise direction of the first pin 3. Each fiber flow 43 extends linearly along a predetermined direction F.

Another characteristic of this embodiment is that when viewed along the chain travel direction X1, the predetermined direction F is parallel to the chain width direction W1 or intersects the chain width direction W1 at a predetermined angle or smaller.

It is preferable that an angle E2 yielded between the predetermined direction F and the chain width direction W1 is set to a range of 0° to 20° (0° ≤ D2 ≤ 20°).

In this embodiment, the predetermined direction F and the chain width direction W1 are parallel to each other, and the angle E2 is set to 0°. In other words, in this case, each fiber flow 43 extends along the chain width direction W1.

As is shown in Fig. 6B, in a case where the angle E2 is larger than 0°, each fiber flow 43 extends so as to incline with respect to the chain width direction W1.

When the angle E2 is set larger than 20°, an impact value (Charpy.impact value) and fatigue strength of the first pin 3 are significantly deteriorated. Because, it becomes difficult to ensure sufficient strength of the first pin 3, the upper limit value of the angle E2 is set to the value specified above.

In addition, shot peening is applied to the peripheral surface 11 of each first pin 3 across the entire area in the chain width direction W1 and along the entire circumference. Likewise, shot peening is applied to the end faces 5 of each first pin 3.

Referring to Fig. 4, each second pin 4 is formed by means of either drawing or rolling. As with the first pin 3, fiber flows are provided and shot peening is applied to the peripheral surface and the end faces thereof.

Still another characteristic of this embodiment is that an arithmetic average roughness Ra of each of the front portion 12 and the back portion 17 as the opposing surfaces of the first and second pins 3 and 4, respectively, is set to a range of not less than 0.1 µm to not more than 2 µm.

The term "arithmetic average roughness Ra" is expressed, for example, by an arithmetic average roughness Ra defined by JIS (Japan Industrial Standards) B0601, and it means an average value found by taking out a predetermined reference length L in the direction of an average line from the roughness curve on the surface regarding each of the front portion 12 and the back portion 17, and sum up the absolute values of deviations from the average line to the measured curved line of each taken out portion to find an average from the total.

In this embodiment, the arithmetic average roughness Ra of each of the front portion 12 of the first pin 3 and the back portion 17 of the second pin 4 is set to about 1 µm.

In a case where the arithmetic average roughness Ra of each of the front portion 12 of the first pin 3 and the back surface 17 of the second pin 4 is smaller than 0.1 µm, it is difficult to ensure a sufficient frictional engaging force between the corresponding front portion 12 and back portion 17. Consequently, considerable sliding may possibly occur between the corresponding front portion 12 and back portion 17 and the rolling contact is interfered while the chain 1 is driven to cause a significant transmission loss.

Conversely, in a case where the arithmetic average roughness Ra of each of the front portion 12 of the first pin 3 and the back portion 17 of the second pin 4 is larger than 2 µm, the front portion 12 and the back portion 17 become so rough that it is difficult for the corresponding front portion 12 and back portion 17 to contact smoothly with each other. This consequently facilitates wearing of the front portion 12 and the back portion 17.

For the reasons described above, the arithmetic average roughness Ra of each of the front portion 12 of the first pin 3 and the back portion 17 of the second pin 4 is set to the range specified above. Regarding the first pin 3 and the second pin 4, the arithmetic average roughness Ra may be set to the range specified above across the entire surface or the arithmetic average roughness Ra may be set to the range specified above for the corresponding front portion 12 and back portion 17 alone.

Referring to Fig. 2, still another characteristic of this embodiment is that a dimensional tolerance of a distance G between the contact center points A of the end faces 5 of the first pin 3 with respect to the chain width direction W1 is set to 0.1 mm or smaller. More specifically, the difference between the maximum allowable dimension (Gmax) and the minimum allowable dimension (Gmin) of the distance G between the contact center points A with respect to the chain width direction W1 is set to 0.1 mm or smaller (Gmax - Gmin ≤ 0.1 mm).

In this embodiment, the dimensional tolerance of the distance G between the contact center points A is set to 0.06 mm. It is more preferable to set the dimensional tolerance to 0.06 mm or smaller in this manner.

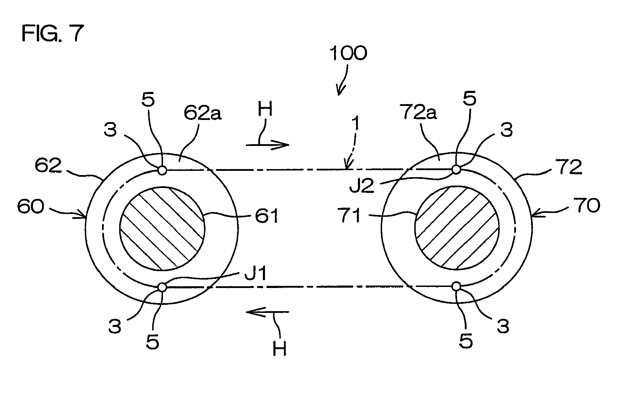

Fig. 7 is a section schematically showing a major portion of the continuously variable transmission 100. Referring to Fig. 7, Fig. 7 shows a case where the effective radius of the drive pulley 60 for the chain 1 and the effective radius of the driven pulley 70 for the chain 1 are almost equal to each other.

In this case, for example, when the chain 1 is driven to rotate in a direction indicated by an arrow H, then, the end faces 5 of the respective first pins 3 (in Fig. 7, only a part of the end faces 5 are indicated by open circles) start to contact with the corresponding sheave surfaces 62a and 63a and 72a and 73a of the pulleys 60 and 70, respectively (the sheave surfaces 62a and 72a alone are shown in Fig. 7) at corresponding contact starting points J1 and J2.

The continuously variable transmission 100 enables continuous speed changes, for example, in the manner as follows. That is, referring to Fig. 2, in a case where the rotation speed of the output shaft 71 is reduced, the groove width of the drive pulley 60 is increased by moving of the movable sheave 63. Accordingly, the effective radius of the drive pulley 60 for the chain 1 is reduced while the end faces 5 of the corresponding first pin 3 of the chain 1 are in sliding contact with the corresponding sheave surfaces 62a and 63a toward the inner side in the radial direction thereof (downward in Fig. 2) under the boundary-lubrication condition. The term "boundary lubrication" means a lubrication state where a part within the contact surface is in a direct contact in the form of microscopic protrusions while the rest is in a contact via a lubricant film. Meanwhile, the driven pulley 70 reduces the groove width by moving of the movable sheave 73. Accordingly, the effective radius of the driven pulley 70 for the chain 1 is increased while the end faces 5 of the corresponding first pin 3 of the chain 1 are in sliding contact with the corresponding sheave surfaces 72a and 73a toward the outer side in the radial direction thereof (upward in Fig. 2) under the boundary-lubrication condition.

Conversely, in a case where the rotation speed of the output shaft 71 is increased, the groove width of the drive pulley 60 is reduced by moving of the movable sheave 63. Accordingly, the effective radius of the drive pulley 60 for the chain 1 is increased while the end faces 5 of the corresponding first pin 3 of the chain 1 are in sliding contact with the corresponding sheave surfaces 62a and 63a in the outward direction under the boundary-lubrication condition. Meanwhile, the driven pulley 70 increases the groove width by moving of the movable sheave 73. Accordingly, the effective radius of the driven pulley 70 for the chain 1 is reduced while the end faces 5 of the corresponding first pin 3 of the chain 1 are in sliding contact with the corresponding sheave surfaces 72a and 73a in the inward direction under the boundary-lubrication condition.

As has been described, according to this embodiment, it is possible to achieve the function and effect as follows. That is, the fiber flows 41 of the link 2 are provided so as to be parallel to the chain travel direction X1 or to intersect the chain travel direction X1 at a predetermined angle or smaller. Accordingly, it is possible to increase the fatigue strength of the link 2 significantly with respect to the chain travel direction X1. Hence, when a tensile force in the chain travel direction X1 acts on the link 2 in association with the driving of the power transmission chain 1 or the like, the link 2 having sufficient fatigue strength can undergo this tensile force. It is thus possible to remarkably enhance the practical durability of the power transmission chain 1.

In addition, the fiber flows 43 of the first and second pins 3 and 4 are provided so as to be parallel to the chain width direction W1 or to intersect the chain width direction W1 at a predetermined angle or smaller. Accordingly, the impact values (Charpy impact value) and the fatigue strength of the first and second pins 3 and 4 can be increased to sufficiently high values. Hence, because the first and second pins 3 and 4 can have sufficient strength, they stand strong against an impact received from the link 2 or the like and have high fatigue strength. Thus, it possible to prevent the occurrence of damage on the first and second pins 3 and 4 over a long period. Consequently, sufficient practical durability of the chain 1 can be ensured with sufficiently ensured the strength of the first and second pins 3 and 4, and allowable transmission torque can be increased. Moreover, the first and second pins 3 and 4 can be formed thinner while maintaining sufficient strength to achieve a size reduction of the chain 1.

In addition, because the angle E1 between the direction of the fiber flows 41 of the link 2 (rolling direction D) and the chain travel direction X1 is set to a range of 0° to 45°, it is possible to increase the fatigue strength of the link 2 significantly with respect to the chain travel direction X1. Hence, when a tensile force in the chain travel direction X1 acts on the link 2 in association with driving of the chain 1 or the like, the link 2 having sufficient fatigue strength can undergo this tensile force. It is thus possible to remarkably enhance the practical durability of the chain 1.

In particular, the chain 1 is a so-called press-fit type chain, and the corresponding first and second pins 3 and 4 are press-fit in the press-fit portions 24 of the front through-holes 9 and the press-fit portions 29 of the rear through-holes 10 in the respective links 2. Hence, in addition to the tensile force in the chain travel direction X1, the links 2 of the chain 1 undergo a load induced by press-fitting. However, because the fatigue strength is ensured sufficiently, adverse effects on the fatigue strength caused when press-fitting the first and second pins 3 and 4 are suppressed.

When the angle E1 between the direction of the fiber flows 41 of the link 2 (rolling direction D) and the chain travel direction X1 exceeds 45°, it is difficult to ensure sufficient fatigue strength of the link 2 with respect to the chain travel direction X1. The angle E1 is therefore set to 45° or smaller.

Also, by setting the angle E1 between the direction of the fiber flows 41 of the link 2 (rolling direction D) and the chain travel direction X1 is set to 20° or smaller, it is possible to further enhance the fatigue strength of the link 2 against the tensile force acting on this link 2 by aligning the chain travel direction X1, that is, the direction of the tensile force that the link 2 undergoes, as parallel as possible to the direction of the fiber flows 41.

Further, the metal material 40 as the raw material of the link 2 is mixed with the impurity 42, such as sulfur content, that causes deterioration of the fatigue strength. The impurity 42 is extended in the rolling direction D in the rolling process. However, because the angle D between the rolling direction D of the metal material 40 and the chain travel direction X1 is set to a range of 0° to 45°, it is possible to reduce the ratio of the impurity 42 contained in the link 2 (sectional area of the impurity 42) sufficiently in the section orthogonal to the chain travel direction X1.

Accordingly, the fatigue strength of the link 2 with respect to the chain travel direction X1 can be increased. Hence, when a tensile force in the chain travel direction X1 acts on the link 2 in association with the driving of the chain 1 or the like, the link 2 having sufficient fatigue strength can undergo the tensile force. It is thus possible to further enhance the practical durability of the chain 1.

When the angle E1 between the rolling direction D of the metal material 40 and the chain travel direction X1 exceeds 45°, it is difficult to ensure sufficient fatigue strength of the link 2 with respect to the chain travel direction X1. The angle E1 is therefore set to 45° or smaller.

Also, by setting the angle D between the rolling direction D of the metal material 40 and the chain travel direction X1 is set to 20° or smaller, it is possible to further enhance the fatigue strength of the link 2 against the tensile force acting on this link 2 by aligning the chain travel direction X1, that is, the direction of the tensile force that the link 2 undergoes, as parallel as possible to the direction along which the impurity 42 extends.

Further, by providing the angle of attack C to the first pin 3, it is possible to smooth the engagement further with the respective pulleys 60 and 70 by optimizing the location of the first pin 3.

The corresponding first pin 3 is loose-fit in the front through-hole 9 in the link 2 and the corresponding second pin 4 is press-fit therein, while the corresponding first pin 3 is press-fit in the rear through-hole 10 in the link 2 and the second pin 4 is loose-fit therein. Accordingly, when the end faces 5 of the first pin 3 come into contact with the corresponding sheave surfaces 62a and 63a and 72a and 73a of the pulleys 60 and 70, respectively, the adjacent second pin 4 comes into rolling and sliding contact with the first pin 3, which allows the links 2 to bend with respect to each other.

In this instance, the mutual rolling contact component is increased and the sliding contact component is reduced extremely between the first and second pins 3 and 4 that come into contact with each other. Consequently, the first pin 3 hardly rotates with respect to the respective sheave surfaces 62a, 63a, 72a, and 73a. It is thus possible to ensure high transmission efficiency by reducing a frictional loss.

Further, because the locus of the mutual contact portion T of the first and second pins 3 and 4 adjacent to each other is adapted to draw an almost involute shape, it is possible to suppress the occurrence of a chordal action of the chain 1 when the first pins 3 are successively meshed with the respective pulleys 60 and 70. It is thus possible to sufficiently reduce noises while the chain 1 is driven.

By setting the angle between the predetermined direction F regarding the fiber flows of the first and second pins 3 and 4 and the chain width direction W1 to a range of 0° to 20°, the impact value (Charpy impact value) and the fatigue strength of the first and second pins 3 and 4 can be increased sufficiently. Hence, because the first and second pins 3 and 4 can have sufficient strength, they stand strong against a large impact received from the corresponding links 2 or pulleys, or the like. Thus, it possible to prevent the occurrence of damage on the first and second pins 3 and 4 over a long period.

Consequently, sufficient practical durability of the chain 1 can be ensured with sufficiently ensured strength of the first and second pins 3 and 4, and allowable transmission torque can be increased. Moreover, the first and second pins 3 and 4 can be formed thinner while maintaining sufficient strength to achieve a size reduction of the chain 1.

In addition, by forming the first and second pins 3 and 4 by means of drawing of a material, the fiber flows 43 can be formed with ease. Further, because shot peening is applied to the peripheral surfaces of the first and second pins 3 and 4, tensile residual stress induced during the formation of the first and second pins 3 and 4 can be removed, and compressive residual stress can be induced. It is thus possible to further enhance the strength against fatigue (strength against cyclic load) of the first and second pins 3 and 4. In particular, it is possible to markedly enhance the strength against fatigue of the first and second pins 3 and 4 in the portions where the first and second pins 3 and 4 are press-fit in the corresponding links 2.

The arithmetic average roughness Ra of each of the front portion 12 of the first pin 3 and the back portion 17 of the second pin 4 is set to 0.1 µm or larger. It is thus possible to ensure a sufficient frictional engaging force between the corresponding front portion 12 and back portion 17. Consequently, the occurrence of a loss caused by sliding between the corresponding first and second pins 3 and 4 can be suppressed to increase transmission efficiency extremely.

Further, by setting the arithmetic average roughness Ra to 2 µm or smaller, it is possible to smoothly contact the corresponding front portion 12 and back portion 17 with each other by smoothing the front portion 12 and the back portion 17 sufficiently. It is thus possible to increase the practical durability by suppressing the wearing of the front portion 12 and the back portion 17.

The variation of the distance G between the contact center points A of each first pin 3 is set to 0.1 mm or smaller. Accordingly, it is possible to maintain the contact start points J1 and J2 of the pulleys 60 and 70, respectively, in the radial direction at almost the constant positions when the respective first pins 3 are meshed with the corresponding pulleys 60 and 70. It is thus possible to prevent the contact start points J1 and J2 at the time of meshing from varying in the radial direction of the pulleys 60 and 70. Hence, it is possible to reduce noises by reducing bending vibrations of the chain 1 by preventing the links 2 from swinging in the radial direction of the pulleys.

Further, because it is possible to prevent the occurrence of deviation by broadly equalizing loads applied to the respective first pins 3 from the corresponding pulleys 60 and 70, the practical durability can be further enhanced.

Because the dimensional tolerance of the distance G of each first pin 3 is set to 0.06 mm or smaller, the variation of the full lengths of the respective first pins 3 can be reduced further. Consequently, the bending vibrations and noises of the chain 1 can be further reduced, and the practical durability can be further enhanced.

In a case where a chain whose dimensional tolerance of the distance between the end faces of each first pin exceeds 0.1 mm is used instead of the chain 1 of this embodiment, undesirable phenomena as described below readily occur. That is, when the respective first pins are meshed with the pulleys, relatively long first pins are meshed in a region where the pulley radius is relatively large, and relatively short first pins are meshed in a region where the pulley radius is relatively small.

Accordingly, the links coupled to the first pins before and after mesh with the pulley vibrate considerably in the radial direction of the pulley. That generates the bending vibrations of the chain to cause larger noise. In addition, when the lengths of the first pins vary considerably, the applied loads that the first pins undergo also vary considerably.

For the reasons as described above, in this embodiment, the dimensional tolerance of the distance G between the contact center points A of the end faces 5 of each first pin 3 of the chain 1 is set to 0.1 mm or smaller.

By combining the configuration to set the angle E1 between the fiber flows 41 of the link 2 and the chain travel direction X1 to a range of 0° to 45° and the configuration to set the angle E2 between the fiber flows 43 of the first and second pins 3 and 4 and the chain width direction W1 to 0° to 20°, it is possible to enhance the durability of the chain 1 synergistically.

Further, by combining the configuration to set the angle E1 between the fiber flows 41 of the link 2 and the chain travel direction X1 to a range of 0° to 45° and the configuration to set the dimensional tolerance of the distance G between the contact center points A of the end faces 5 of the first pin 3 with respect to the chain width direction W1 to 0.1 mm or smaller, it is possible to enhance the durability of the chain 1 synergistically.

Still further, by combining the configuration to set the angle E2 between the fiber flows 43 of the first and second pins 3 and 4 and the chain width direction W1 to a range of 0° to 20° and the configuration to set the dimensional tolerance of the distance G between the contact center points A of the end faces 5 of the first pin 3 with respect to the chain width direction W1 to 0.1 mm or smaller, it is possible to enhance the durability of the chain 1 synergistically.

Yet further, by combining the configuration to set the angle E1 between the fiber flows 41 of the link 2 and the chain travel direction X1 to a range of 0° to 45° and the configuration to set the arithmetic average roughness Ra of each of the front portion 12 of the first pin 3 and the back portion 17 of the second pin 4 to a range of not less than 0.1 µm to not more than 2.0 µm, it is possible to enhance the durability of the chain 1 synergistically.

Yet still further, by combining the configuration to set the angle E2 between the fiber flows 43 of the first and second pins 3 and 4 and the chain width direction W1 to a range of 0° to 20° and the configuration to set the arithmetic average roughness Ra of each of the front portion 12 of the first pin 3 and the back portion 17 of the second pin 4 to a range of not less than 0.1 µm to not more than 2.0 µm, it is possible to enhance the durability of the chain 1 synergistically.

As has been described, it is possible to realize the continuously variable transmission 100 that is capable of transmitting high torque and also achieving excellent transmission efficiency, silence, and durability with compactness and less vibration.

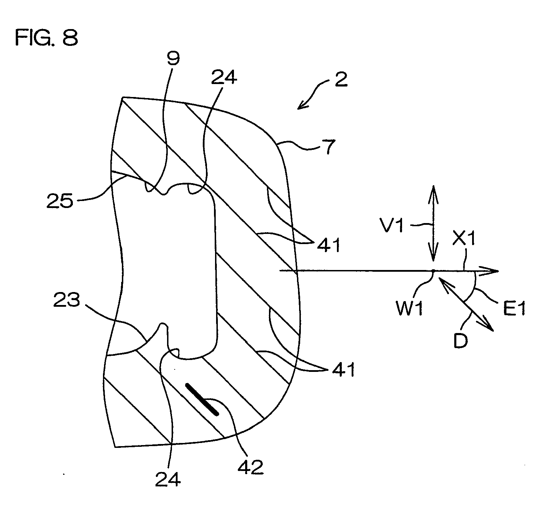

In this embodiment, the fiber flows may be provided to only one of the link 2, the first pin 3, and the second pin 4 or the fiber flows may be provided to any two of the foregoing. The angle E1 between the direction of the fiber flows 41 of the link 2 (rolling direction D) and the chain travel direction X1 may be larger than 0° (0° < E1 ≤ 45°). For instance, as is' shown in Fig. 8, the angle E1 may be set, for example, to 45° (D=45°)

In Fig. 8, the angle is defined such that a direction headed toward inside of the chain's diameter direction as the link 2 travels in the chain travel direction X1 is on the positive side. Alternatively; a direction headed toward outside of the chain's diameter direction as the link 2 travels in the chain travel direction X1 may be defined as the positive side.

The locus of the rolling and sliding contact between the first and second pins 3 and 4 in a pair does not necessarily draw an involute curve. To be more concrete, the section of the front portion 12 of the first pin 3 does not have to be shaped into an involute curve. For example, the section of the front portion 12 may be a circular arc curve having one or more than one curvature radius. The section of the back portion 17 of the second pin 4 does not have to be shaped into a straight line, either.

Further, the corresponding first and second pins 3 and 4 are not necessarily press-fit in the front through-holes 9 and the rear through-hole 10, respectively. In addition, a pair of the end portions of the second pin 4 may be adapted to come into contact with the sheave surfaces 62a and 63a and 72a and 73a of the pulleys 60 and 70, respectively. Further, only the second pin 4 of the first and second pins 3 and 4 may be adapted to engage with the sheave surfaces. In this case, a pair of the respective end faces in the chain width direction W1 of the second pin 4 engages with the pulleys, and the dimensional tolerance of the distance between the contact center points of the end faces is set to 0.1 mm or smaller.

Alternatively, the links 2 may be made of a material other than the materials specified above. Further, the value of the angle of attack C of the first pin 3 may be larger or smaller than the value specified above.

The invention may be applied to a so-called block-type power transmission chain in which a member having end faces (power transmission surfaces) that come into frictional contact with the pulleys is disposed in the vicinity of a pair of end portions of the first pin, and the first pin and the members having the power transmission surfaces serve as a power transmission block. In the power transmission block, for example, the members formed with the power transmission surfaces and the pin are formed separately.

Further, the location of the front through-hole 9 and the location of the rear through-hole 10 in the link 2 may be changed with each other. A communication groove (slit) may be provided in the pillar portion between the front through-hole 9 and the rear through-hole 10 in the link 2. In this case, the flexibility of the link can be set to a desired characteristic according to the size and shape of the slit. It is thus possible, for example, to increase the flexibility of the link to reduce stress induced in the link.

In addition, it is preferable that the first and second pins 3 and 4 are formed by means of drawing or rolling. However, they may be formed by any other means.

Further, shot peening applied to the first and second pins 3 and 4 may be applied to the peripheral surfaces 11 and 16 only at portions to be press-fit in the corresponding links 2.

Alternatively, shot peening may not be applied to the first pin 3 or shot peening may not be applied to the second pin 4. Further, in a case where the first pin 3 is viewed from the side of the one end face 5, the fiber flows 43 may be inclined so as to be distorted rightward with respect to the lengthwise direction L or they may be inclined so as to be distorted leftward. Likewise, in a case where the second pin 4 is viewed from the side of the one end face, the fiber flows may be inclined so as to be distorted rightward with respect to the lengthwise direction L or they may be inclined so as to be distorted leftward.

Further, the invention is not limited to the configuration in which the groove widths of both the drive pulley 60 and the driven pulley 70 are variable. It may be configured that the groove width of either one of the pulleys is variable while the other pulley has a fixed groove width. In addition, the configuration is described above in which the groove widths vary continuously (in a stepless manner). However, the invention may be applied to other types of power transmission apparatus in which the groove widths are varied step by step or fixed (invariable) The chain of the invention may be engaged with a power transmission target other than pulleys.

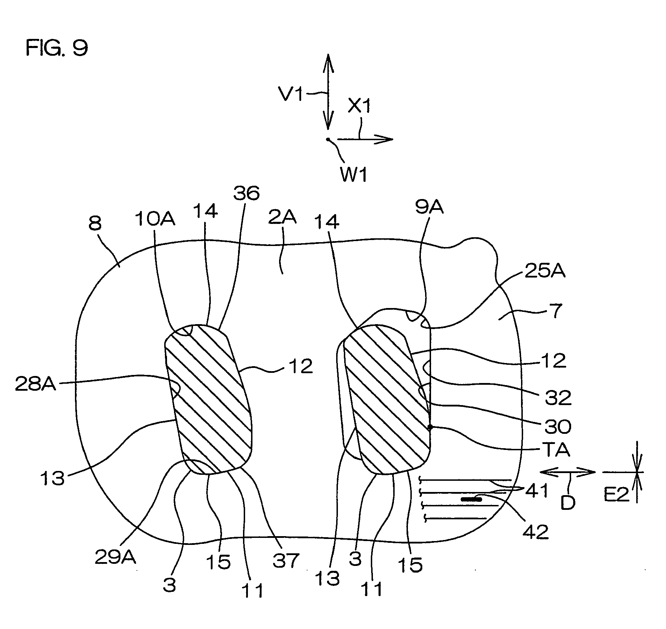

Fig. 9 is a partial section showing a major portion according to still another embodiment of the invention. Hereinafter, differences from the embodiment shown in Fig. 4 will be chiefly described. Like components are labeled with like reference numerals with respect to the embodiment shown in Fig. 4 and descriptions thereof are omitted herein.

Referring to Fig. 9, one of the characteristics of this embodiment is that links 2A aligned adjacent in the chain travel direction X1 are coupled mutually bendable to each other using one (single) first pin 3.

To be more concrete, a corresponding first pin 3 is loose-fit in the front through-holes 9A in the respective links 2A so as be relatively movable and another corresponding first pin 3 is press-fit in the rear through-holes 10A in the respective links 2A so as to be restricted in relative movements.

A front portion 32 (opposing portion) of the peripheral portion 30 of the front through-hole 9A with respect to the chain travel direction X1 has a sectional shape extending in the orthogonal direction V1. The front portion 32 opposes the front portion 12 of the first pin 3 loose-fit in the front through-hole 9A and comes into rolling and sliding contact with the front portion 12 at a contact portion TA. Accordingly, a link 2A as a pairing member and the first pin 3 loose-fit in this link 2A come into rolling and sliding contact with each other in association with the bending between the links 2A.

According to the embodiment shown in Fig. 9, because a distance (pitch) between the first pins 3 aligned adjacent in the chain travel direction X1 can be shortened, it is possible to downsize the chain. Moreover, because the load per first pin 3 can be reduced by increasing the number of first pins 3 to be meshed with the respective pulleys at a time, it is possible to further enhance allowable transmission torque and practical durability.

In the embodiment shown in Fig. 9, the locus of the rolling and sliding contact between the first pin 3 and the link 2A does not necessarily draw an involute curve. To be more concrete, the section of the front portion 12 of the first pin 3 does not have to be shaped into an involute curve. For example, the section of the front portion 12 may be shaped into a circular arc curve having one or more than one curvature radius. The section of the front portion 32 of the front through-hole 9A in the link 2A does not have to be shaped into a straight line. Further, the first pin 3 is not necessarily press-fit in the rear through-hole 10A and it may be loose-fit therein.

While the specific embodiments of the invention have been described, modifications, alterations, and equivalents readily occur to anyone skilled in the art who understands the content above. The invention, therefore, is limited solely by the scope and equivalents of the appended claims.

### Examples

### Links

Test Examples 1 and 2 and Comparable Example 1 of links in which the first and second pins were inserted were manufactured as follows.

For Test Examples 1 and 2 and Comparative Example 1, copper plates of the same lot having a thickness of 0.8 mm and made of JIS-SK5 were used, and samples were manufactured so that the angle between the direction of the fiber flows of the links (rolling direction of the material) and the lengthwise direction of the links (direction along the chain travel direction) was set as follows.
Test Example 1: 0°
Test Example 2: 45°
Comparable Example 1: 90°

A fatigue test was conducted using Test Examples 1 and 2 and Comparative Example 1. To be more concrete, cyclic load was applied to each of Test Examples 1 and 2 and Comparative Example 1 under the conditions specified below, and the number of repetitions (cycle numbers) until breaking occurred was counted.

Loading condition (1) : a load of 0.49 kN and a load of 2.45 kN were applied repetitively at a cycle of 10 Hz (a ratio of cyclic load variation was 5). The fatigue test was conducted three times for each of Test Examples 1 and 2 and Comparative Example 1 under the loading condition (1), and the average value of the cycle numbers was calculated.

Loading condition (2) : a load of 0.49 kN and a load of 1.47 kN were applied repetitively at a cycle of 10 Hz (a ratio of cyclic load variation was 3). The fatigue test was conducted three times for each of Test Examples 1 and 2 and Comparative Example 1 under the loading condition (1), and the average value of the cycle numbers was calculated. The results are set forth in Table 1 below.

### [Table 1]

**Table 1**

| | Loading Condition (1) | Loading Condition (2) |
|---|---|---|
| Test Example 1 | 17342 times | 172665 times |
| Test Example 2 | 15446 times | 197098 times |
| Comparative Example 1 | 14734 times | 138230 times |

Under the loading condition (1), Test Example 1 shows the cycle number which is about 18% larger than that of Comparative Example 1. Test Example 2 shows the cycle number which is about 5% larger than that of Comparative Example 1.

Under the loading condition (2), Test Example 1 shows the cycle number which is about 25% larger than that of Comparative Example 1. Test Example 2 shows the cycle number which is about 43% larger than that of Comparative Example 1.

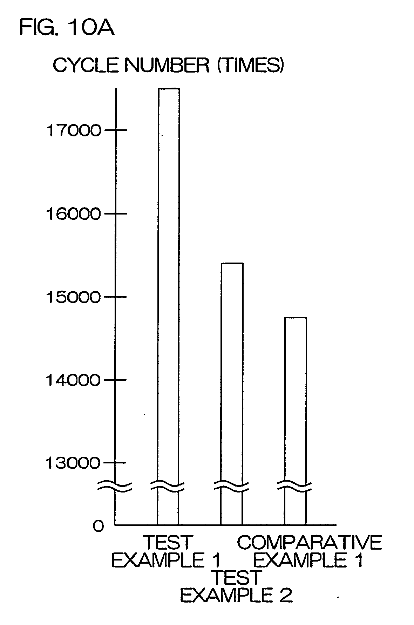

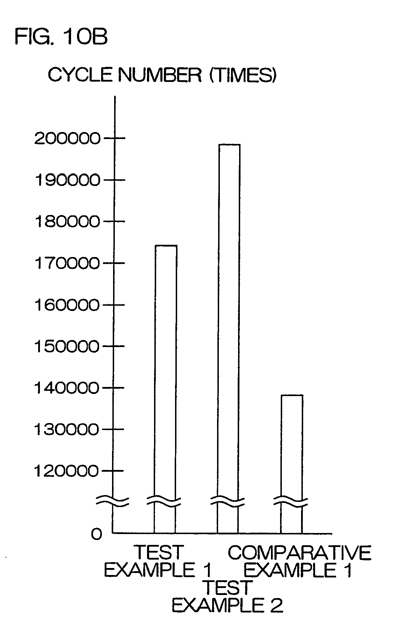

Fig. 10A is a graph showing the cycle numbers until the links break under the loading condition (1). As is shown in Fig. 10A, both Test Examples 1 and 2 show the cycle numbers larger than that of Comparative Example 1. Fig. 10B is a graph showing the cycle numbers until the links break under the loading condition (2). As is shown in Fig. 10B, both Test Examples 1 and 2 show the cycle numbers larger than that of Comparative Example 1.

As has been described, Test Examples 1 and 2 proves extremely excellent strength against fatigue (strength against cycle load). In particular, the advantage is noticeable under the loading condition where the ratio of the cycle load variation is 5 or smaller.

### Pins

Test Example 3 and Comparative Example 2 of the first pin were manufactured as follows.

Test Example 3 was made of SUJ2 (bearing steel) and formed by means of drawing. The fiber flows on the peripheral surface of Test Example 3 extended linearly along the lengthwise direction (chain width direction).

Comparative Example 2 was made of SKD11 (alloy tool steel) and formed by means of discharging. The fiber flows on the peripheral surface of Comparative Example 2 were in a state where no particular directivity was present.

The SUJ2 and SKD11 were the materials chosen in view of availability of wire rods and plate materials. The hardness after heat treatment is set to HRC60 for both. Hence, both have substantially the same strength, and using different materials for Test Example 3 and Comparative Example 2 is regarded as no practical influence on the test results described below.

A bending test (3-point bending test) and a fatigue test were conducted using Test Example 3 and Comparative Example 2.

### Bending Test

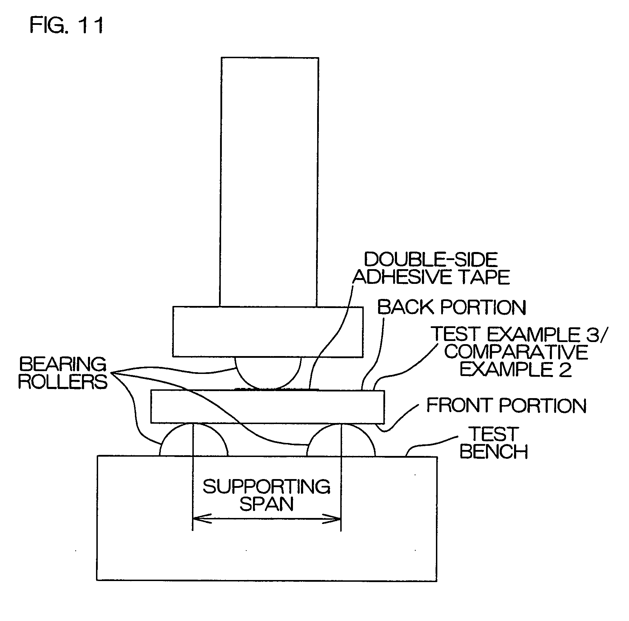

As is shown in Fig. 11, two bearing rollers (diameter: 7 mm, length: 7 mm) were aligned in parallel on the test bench, and Test Example 3 was placed thereon. The distance (supporting span) of between contact points of Test Example 3 and corresponding bearing rollers was set to 17.5 mm. Test Example 3 was in contact with the respective bearing rollers in a posture that the front portion (involute surface) of the peripheral surface opposing the second pin was faced downward.

A double-side adhesive tape was attached to the surface (back surface) of Test Example 3 facing upward between the contact points of Test Example 3 and the respective bearing rollers with respect to the lengthwise direction of Test Example 3. One bearing roller same as the bearing rollers described above was disposed on the upper side of Test Example 3, and this bearing roller applied the bending load to Test Example 3 by pressing Test Example 3 downward via the double-side adhesive tape. The test was conducted on Comparative Example 2 in the same manner.

In the bending tests, breaking loads were found and bending strengths were compared. The bending tests were conducted by preparing two Test Examples 3 and two Comparative Examples 2 each. The results are set forth in Table 2 below.

### [Table 2]

**Table 2**

| | Breaking Load (kN) | Bending Strength (N/mm²) |
|---|---|---|
| Test Example 3 | 3.55 | 2110 |
| | 3.31 | 1967 |
| Comparative Example 2 | 2.85 | 1694 |
| | 2.55 | 1516 |

As is set forth in Table 2, the bending strength of Test Example 3 is superior to that of Comparative Example 2. In this manner, Test Example 3 proves the sufficiently high bending strength in comparison with Comparative Example 2.

### Fatigue Test

Bending tests were conducted on each of Test Example 3 and Comparative Example 2. To be more concrete, the cyclic load was applied to each of Test Example 3 and Comparative Example 2 under the conditions specified below and the number of times until breaking occurred (the number of times the cycle load was applied, hereinafter, referred to as the cycle number) was counted.
Loading condition (1) : a load of 750 N and a load of 2250 N were repetitively applied at the cycle of 10 Hz.
Loading condition (2) : a load of 500 N and a load of 2000 N were repetitively applied at the cycle of 10 Hz.
Loading condition (3) : a load of 500 N and a load of 1500 N were repetitively applied at the cycle of 10 Hz.

The results are set forth in Table 3 below.

### [Table 3]

**Table 3**

| | Loading Condition (1) | Loading Condition (2) | Loading Condition (3) |
|---|---|---|---|
| Test Example 3 | 7148 times | 26126 times | 1 × 10⁶ times No damage |
| Comparative Example 2 | - | 830 times | 11459 times |

Under the loading condition (2), in contrast to Comparative Example 2 that broke when the cycle number reached 830 times, Test Example 3 did not break until the cycle number reached 26126 times. In short, Test Example 3 has durability about 31.5 times higher than that of Comparative Example.

Under the loading condition (3), in contrast to Comparative Example 2 that broke when the cycle number reached 11459 times, Test Example 3 did not break (was not damaged) even the cycle number reached 1, 000, 000 times. In short, Test Example 3 has durability at least about 87.3 times higher than that of Comparative Example 2.

Because it is obvious from the test results as above that Comparative Example 2 is damaged in a quite short time under the loading condition (1), the evaluation was made on Test Example 3 alone. Under the loading condition (1), Test Example 3 did not break until the cycle number reached 7148 times.

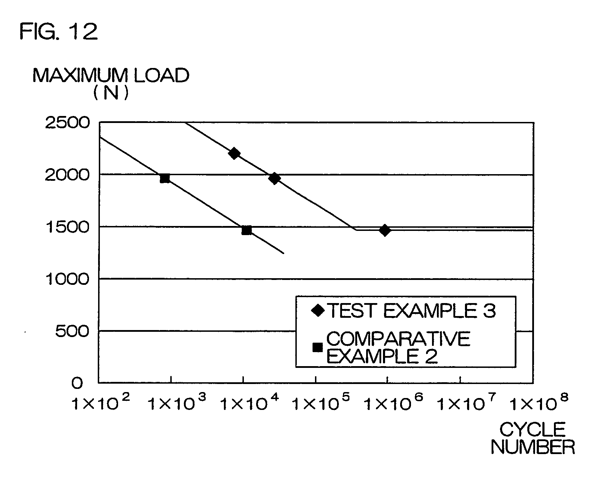

Fig. 12 is a graph showing the relation of the cycle number until the first pin break and the maximum value of the cycle load. As is shown in Fig. 12, Test Example 3 can withstand a higher cyclic load and a larger cycle number than Comparative Example 2.

As has been described, Test Example 3 proves extremely excellent strength against fatigue (strength against cycle load).

### Power Transmission Apparatus

### Comparative Example 3

A chain in which links aligned adjacent in the chain travel direction were coupled to one another using the first and second pins and a power transmission apparatus provided with two pulleys were manufactured. The chain was wound around the two pulleys.

A pair of end faces of each first pin could come into frictional contact with the corresponding sheave surfaces of the respective pulleys. The dimensional tolerance of the distance between the contact center points of a pair of the end faces of each first pin in the chain width direction was set to 110 µm (0.11 mm).

### Examples 1 and 2

Two pieces of power transmission apparatus same as Comparative Example 3 were manufactured. Examples 1 and 2 were different from Comparative Example 3 in the following points.
Example 1: the dimensional tolerance of the distance between the contact center points of a pair of end faces of each first pin in the chain width direction was set to 90 µm (0.09 mm).
Example 2: the dimensional tolerance of the distance between the contact center points of a pair of end faces of each first pin in the chain width direction was set to 60 µm (0.06 mm).

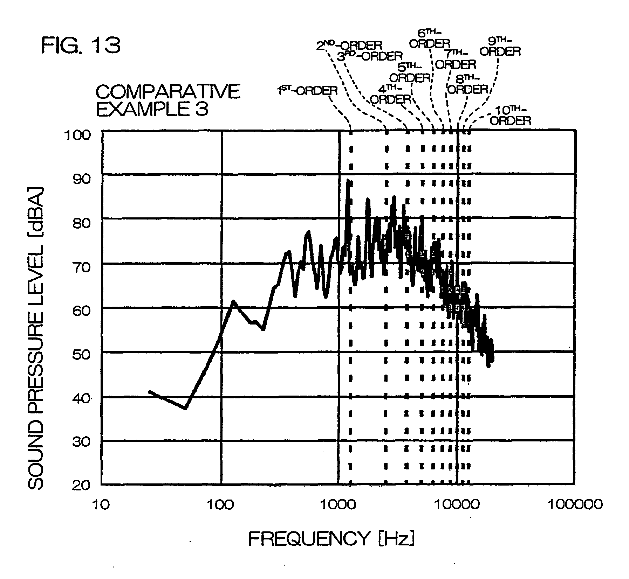

Sounds (driving sounds) produced in association with the driving of the power transmission apparatus were measured for each of Comparative Example 3 and Examples 1 and 2 to find a relation of the frequency and the sound pressure level of the driving sounds. The results are shown in Fig. 13 through Fig. 15.

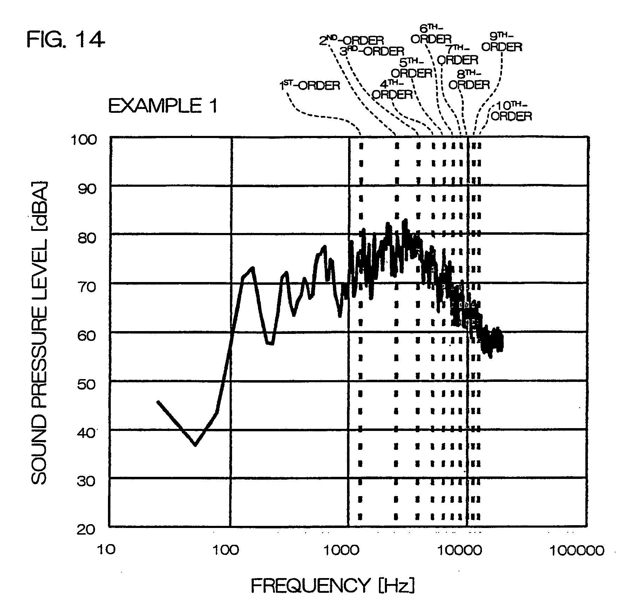

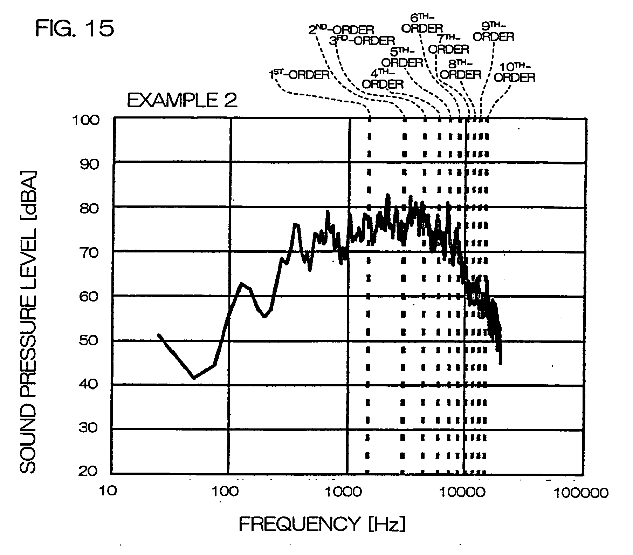

Fig. 13 is a graph showing a relation of the frequency and the sound pressure level of the driving sounds in Comparative Example 3. Fig. 14 is a graph showing a relation of the frequency and the sound pressure level of the driving sounds in Example 1. Fig. 15 is a graph showing a relation of the frequency and the sound pressure level of the driving sounds in Example 2. In Fig. 13 through Fig. 15, 1^{st}-order, 2^{nd}-order,..., 9^{th}-order, and 10^{th}-order indicate the order components relating to the slapping sounds of the first pin and the pulleys.

As is shown in Fig. 13, in Comparative Example 3, the sound pressure level reaches the maximum at the frequency in the vicinity of 1000 Hz. The maximum sound pressure level reaches about 89 dBA.

On the contrary, as is shown in Fig. 14, in Example 1, the sound pressure level reaches the maximum at the frequency in the vicinity of 3000 Hz. The maximum sound pressure level is suppressed to about 83 dBA. The driving sounds are therefore reduced sufficiently in comparison with Comparative Example 3.

On the other hand, as is shown in Fig. 15, in Example 2, the sound pressure level is distributed more homogeneously than that in Example 1, and the driving sounds are improved to be negligible noises (excellent in audibility).

The above results prove that driving sounds of the power transmission apparatus can be reduced sufficiently by setting the dimensional tolerance of the distance between the contact center points of a pair of end faces of each first pin in the chain width direction to the predetermined value or smaller.

## Claims

1. A power transmission chain, comprising:
long first and second power transmission elements made of metal and coupled to each other,
wherein:
a lengthwise direction of the first power transmission element is along a chain travel direction;
a lengthwise direction of the second power transmission element is along a chain width direction orthogonal to the chain travel direction;
at least one of the first and second power transmission elements includes a fiber flow; and
the fiber flow is parallel to the lengthwise direction of the at least one of the first and second power transmission elements or intersects the lengthwise direction of the at least one of the first and second power transmission elements at a predetermined angle or smaller.

2. The power transmission chain according to claim 1, wherein:
the fiber flow is provided to the first power transmission element; and
the fiber flow of the first power transmission element is parallel to the lengthwise direction of the first power transmission element or intersects the lengthwise direction of the first power transmission element at an angle of 45° or smaller.

3. The power transmission chain according to claim 1, wherein:
the fiber flow is provided to the first power transmission element; and
the fiber flow of the first power transmission element is parallel to the lengthwise direction of the first power transmission element or intersects the lengthwise direction of the first power transmission element at an angle of 20° or smaller.

4. The power transmission chain according to claim 1, wherein:
the fiber flow is provided to the second power transmission element; and
the fiber flow of the second power transmission element is parallel to the lengthwise direction of the second power transmission element or intersects the lengthwise direction of the second power transmission element at an angle of 20° or smaller.

5. The power transmission chain according to claim 1, wherein:
the first power transmission element includes a plate-shaped link having a through-hole through which the second power transmission element is inserted.

6. The power transmission chain according to claim 5, wherein:
the link is formed by means of rolling.

7. The power transmission chain according to claim 1, wherein:
the second power transmission element is formed by means of one of drawing and rolling.

8. The power transmission chain according to claim 1, wherein:
shot peening is applied to a surface of the second power transmission element.

9. The power transmission chain according to claim 1, wherein:
the second power transmission element includes a power transmission member having a pair of end faces that come into contact with a pulley to be power transmittable.

10. The power transmission chain according to claim 1, wherein:
the second power transmission element has a first power transmission member having a pair of end faces that come into contact with a pulley to be power transmittable and a second power transmission member in pair with the first power transmission member; and
one of the first and second power transmission members moves relatively with respect to the other power transmission element in association with bending of the power transmission chain while coming into contact with the other power transmission member in a contact state including at least one of rolling contact and sliding contact.

11. The power transmission chain according to claim 10, wherein:
the first power transmission element has first and second through-holes aligned in front and rear in the chain travel direction; and
the corresponding first power transmission member is fit in the first through hole so as to be relatively movable and the corresponding second power transmission member is fit therein so as to be restricted in a relative movement, and the corresponding first power transmission member is fit in the second through-hole so as to be restricted in a relative movement and the corresponding second power transmission member is fit therein so as to be relatively movable.

12. The power transmission chain according to claim 10, wherein:
a locus of movements of a mutual contact portion of the first and second power transmission members form an involute shape.

13. The power transmission chain according to claim 1, wherein:
the fiber flow is formed with the at least one of the first and second power transmission elements across an entire area in the lengthwise direction.

14. A power transmission apparatus, comprising:
a pair of pulleys each having a pair of mutually opposing sheave surfaces in a form of a circular conical surface,
wherein power is transmitted between the pair of pulleys via the power transmission chain set forth in any one of claims 1 through 13.
